# EUROPÄISCHE PATENTSCHRIFT

(11) **EP 0 941 428 B1**
(45) Veröffentlichungstag und Bekanntmachung des Hinweises auf die Patenterteilung: **29.08.2001**
(21) Anmeldenummer: 97950070.9
(22) Anmeldetag: 03.11.1997
(51) Int. Cl.: F16G 13/16, H02G 11/00

(54) **BAUSATZ FÜR EIN AN MEHRERE ANWENDUNGSFÄLLE ANPASSBARES KETTENGLIED**
COMPONENT KIT FOR A CHAIN LINK ADAPTABLE TO DIFFERENT USES
JEU DE PIECES POUR CHAINON ADAPTABLE A PLUSIEURS UTILISATIONS

(30) Priorität: 26.11.1996 DE 19648967
(43) Veröffentlichungstag der Anmeldung: 15.09.1999
(73) Patentinhaber: Kabelschlepp GmbH, 57074 Siegen (DE)
(72) Erfinder: WEBER, Willibald, D-57250 Netphen (DE)
(74) Vertreter: Kahlhöfer, Hermann, Dipl.-Phys.
(86) Internationale Anmeldenummer: EP9706045
(87) Internationale Veröffentlichungsnummer: WO9823879

(56) Entgegenhaltungen:
- EP-A- 0 415 034
- WO-A-88/07637
- DE-U- 9 102 121
- DE-U- 9 109 241

## Beschreibung

Gegenstand der Erfindung ist ein Bausatz mit mehreren Bausatzelementen für ein an mehrere Anwendungsfälle anpaßbares Kettenglied, ein Kettenglied, das mit den Bausatzelementen komplettiert ist sowie eine Energieführungskette mit wenigstens einem solchen Kettenglied.

Versorgungsleitungen für die Zuführung von Verbrauchsmitteln aller Art zu beweglichen Maschinenapparaten werden in sogenannten Energieführungsketten verlegt. Die Energieführungsketten weisen eine Vielzahl von miteinander gelenkig verbundenen Kettengliedern auf, die einen Kanal zur Aufnahme von Versorgungsleitungen bilden. Die Verlegung von Versorgungsleitungen in Energieführungsketten muß mit größter Sorgfalt vorgenommen werden. Insbesondere soll ein Verlegen mehrerer Leitungen aufeinander und das direkte Nebeneinanderlegen von Leitungen mit unterschiedlichen Durchmessern vermieden werden, um sicherzustellen, daß die Leitungen nicht gegeneinander reiben, wodurch eine Beschädigung der Leitungen eintreten kann. Desweiteren muß bei der Verlegung von Versorgungsleitungen, bei denen es sich um Druckschläuche handelt, berücksichtigt werden, daß diese sich frei bewegen können, da sie sich bei Druckwechselbelastungen kürzen oder längen. In einer Energieführungskette werden auch Elektroleitungen verlegt. Werden Elektroleitungen als ein Bündel in eine Energieführungskette verlegt, so besteht die Gefahr einer Zerstörung der Leitungen und gegebenenfalls der Energieführungskette, wenn diese aus Kunststoff besteht, da gebündelte Elektroleitungen während des Betriebes sich erhitzen.

Zur Lösung dieser Probleme bei der Verlegung von Versorgungsleitungen in Energieführungsketten sind bereits unterschiedliche Lösungsvorschläge unterbreitet worden. Eine optimale Lösung wird durch sogenannte Lochstege erreicht, durch die die verlegten Leitungen voneinander getrennt, geführt werden.

Ein weiterer Lösungsvorschlag ist durch das Gebrauchsmuster G 91 02 121.9 U1 bekannt. Nach diesem Vorschlag weist eine Energieführungskette eine Einteilung des Energieführungskanals auf, die in einfacher Weise und mit wenigen, einfach konstruierten Bauteilen veränderbar ist. Hierzu wird vorgeschlagen, daß zwischen den Traversen und den Kettenlaschen Trennstege und Sprossen angeordnet sind. Jeder Trennsteg weist mindestens eine quer zu seiner Längsrichtung angeordnete und zu seiner Stegseite hin offene Ausnehmung auf. Die Sprosse ist in die Ausnehmung einschiebbar, wobei die Ausnehmung eine Hinterschneidung hat. Die Einteilung des Energieführungskanals mit einem Trennsteg-Sprossen-System ist mittels zweier Trennstege und einer Sprosse möglich. Durch die Verwendung mehrerer Sprossen und Trennstege kann der Energieführungskanal in weitere Abschnitte unterteilt werden. Die Sprossen sind dabei in den eine Hinterschneidung aufweisenden Ausnehmungen derart gehalten, daß ein unbeabsichtigtes Lösen der Sprossen aus den Trennstegen verhindert wird.

Durch das Gebrauchsmuster G 91 09 241.8 ist eine Energieführungskette bekannt, bei der der Innenraum des Energiekettenkanals durch Trennkörper und Zwischenböden unterteilbar ist. Die Zwischenböden weisen elastisch verformbare Augen auf, die jeweils einen nach Innen weisenden mit entsprechenden Rastvertiefungen in den Trennkörpern zusammenwirkenden Rastvorsprung aufweisen. Die elastisch verformbaren Augen umgreifen den betreffenden Trennkörper. Durch die Ausgestaltung der Augen ist insbesondere ein nachträglicher Einbau der Trennkörper mit Zwischenböden in eine Energieführungskette relativ aufwendig.

Ein weiterer Vorschlag für ein Trennsteg-Sprossen-System für eine Energieführungskette ist durch die EP-A-0 343 192 bekannt. Nach der EP-A-0 343 192 hat jeder Trennsteg auf beiden Seiten eine oder mehrere, über seine Höhe verteilte und jeweils beiderseits miteinander fluchtende Haltenuten. Die Sprossen weisen an ihren Enden Rastnasen auf, die jeweils wahlweise in eine der Haltenuten einschiebbar sind. Diese Ausführungsform erfordert eine besondere Ausgestaltung der Haltenuten und der Rastnasen, um sicherzustellen, daß die Trennstege und die Sprossen nicht bereits während der Montage auseinanderfallen. Während des Betriebes einer Energieführungskette werden durch die Leitungen zusätzliche Kräfte auf die Sprossen und indirekt auf die Trennstege ausgeübt, die diese aufnehmen müssen. Die Trennstege müssen aufgrund der Konstruktion eine entsprechende Dicke aufweisen, wodurch der zur Verfügung stehende Raum des Führungskanals verringert wird.

Ein weiteres Bausatzsystem für eine Energieführungskette ist aus EP-A-415 035 bekannt.

Ausgehend von diesem Stand der Technik liegt der Erfindung die Aufgabe zugrunde, einen alternativen Bausatz für ein Kettenglied anzugeben, wobei dieses auch an verschiedene Anwendungsfälle ausgerüstet werden kann. Ein weiteres Ziel ist es ein Kettenglied und eine Energieführungskette anzugeben, wobei dieser Bausatz benutzt wird.

Als technische Lösung wird ein Bausatz mit mehreren Bausatzelementen für ein an mehrere Anwendungsfälle anpaßbares Kettenglied, daß zwei Kettenlaschen hat, vorgeschlagen, der folgende Bausatzelemente aufweist
a) Trennkörper, die mehrere im wesentlichen quer zur Längserstreckung der Trennkörper verlaufende Auflagen sowie Halteabschnitte aufweisen;
b) Zwischenböden, der an zwei Trennkörpern durch Befestigungselemente, die einen Halteabschnitt der Trennkörper wenigstens teilweise umgreifen, befestigbar sind, und die Zwischenböden wenigstens teilweise auf den Auflagen aufliegen;
c) Traversen, die mit einem Haltebereich versehen sind, an denen Trennkörper positionierbar, vorzugsweise lösbar befestigbar, sind. dadurch gekennzeichnet, daß die Halteabschnitte durch säulenartige Randabschnitte gebildet sind.

Durch den Bausatz wird eine Möglichkeit angegeben, ein Kettenglied an mehrere Anwendungsfälle anzupassen. Die Bausatzelemente können so zusammengesetzt werden, daß hierdurch ein Trennsystem für Leitungen bereitgestellt wird, daß in ein Kettenglied einsetzbar ist. Die Zwischenböden können unterschiedlicher Länge sein, wodurch eine Anpassung an unterschiedliche Anwendungsfälle verbessert wird. Die Montage der Bausatzelemente ist relativ einfach, da die Befestigungselemente der Zwischenböden mit den Randabschnitten in konstruktiv einfacher Weise verbindbar sind. Die Trennkörper weisen mehrere im wesentlichen quer zur Längserstreckung der Trennkörper verlaufende Auflagen auf, auf denen die Zwischenböden wenigstens teilweise aufliegen. Hierdurch wird erreicht, daß die Gewichtskraft der Leitung bzw. der Leitungen von den Zwischenböden aufgenommen und in den Trennkörper eingeleitet wird. Dieser Kraftverlauf entlastet die Befestigungselemente, so daß diese im wesentlichen nur die in Längsrichtung eines Kettengliedes durch eine Leitung ausgeübte Kraft aufnehmen müssen.

Um die Positionierung der zusammengesetzten Bausatzelemente zwischen zwei Kettenlaschen eines Kettengliedes, die durch eine Traverse miteinander verbunden sind, zu erleichtern, wird vorgeschlagen, daß die Trennkörper an ihren jeweiligen, gegenüberliegenden Endabschnitten wenigstens einen sich in Längsrichtung des Trennkörpers erstreckenden Vorsprung aufweist. Der Vorsprung ist zur Anlage an die Traverse bringbar. Hierdurch wird eine Verschiebung der zusammengesetzten Bausatzelemente in Längsrichtung des Kettengliedes verhindert. Nach einer weiteren vorteilhaften Weiterbildung wird vorgeschlagen, daß jeder Trennkörper an seinem jeweiligen Endabschnitt nur einen Vorsprung aufweist. Bevorzugt ist eine Ausbildung der Trennkörper, bei denen die Vorsprünge diametral zueinander versetzt sind.

Werden die Trennkörper einzeln auf einer Traverse angeordnet, wird vorgeschlagen, daß jeder Trennkörper an seinem jeweiligen Endabschnitt zwei beabstandete Vorsprünge aufweist. Der Abstand zwischen den Vorsprüngen ist dabei vorzugsweise so bemessen, daß zwischen den Vorsprüngen und der Traverse eine formschlüssige Verbindung entsteht, wobei die Trennkörper eine Verschiebung auf der Traverse in ihrer Längsrichtung zulassen.

Zur ortsfesten Positionierung der Trennkörper auf einer Traverse wird nach einer weiteren vorteilhaften Ausgestaltung der Trennkörper vorgeschlagen, daß diese an mindestens einem Endabschnitt wenigstens eine sich in Längsrichtung des Trennstegs erstreckende Rastnase aufweist, die mit dem Haltebereich der Traverse zusammenwirkt. Hierdurch wird eine Arretierung der Trennkörper auf der Traverse erreicht.

Nach einem weiteren vorteilhaften Gedanken wird vorgeschlagen, daß der Trennkörper Anschläge aufweist, die oberhalb der Auflagen ausgebildet sind. Hierdurch wird ein Abheben des Zwischenbodens von einer Auflage verhindert.

Um den freien Querschnitt der Kettenlaschen durch eine möglichst geringe Anzahl von Bausatzelementen unterteilen zu können, wird vorgeschlagen, daß die Auflagen und gegebenenfalls die Anschläge auf beiden Seiten des Trennkörpers fluchtend ausgebildet sind. Hierdurch wird ein Trennkörper geschaffen, der beidseits mit Zwischenböden bestückbar ist. Die Auflagen und gegebenenfalls die Anschläge sind vorzugsweise an einem im wesentlichen plattenförmigen Tragelemente mit Längsrändern ausgebildet. Die Auflagen und gegebenenfalls die Anschläge erstrecken sich über die gesamte Quererstreckung des Tragelementes. Bevorzugt ist jedoch eine Ausbildung des Trennkörpers in der Weise, daß die Auflagen und gegebenenfalls die Anschläge lediglich über einen Teil der Quererstreckung des Tragelementes ausgebildet sind. Die Auflagen und gegebenenfalls die Anschläge erstrecken sich von den Längsrändern einwärts in das Tragelement.

Nach einer weiteren vorteilhaften Ausgestaltung des Bausatzes wird vorgeschlagen, daß jeder Halteabschnitt eines Trennkörpers säulenartig ausgebildet ist. Bei einem Trennkörper, der zwei säulenartige Halteabschnitte aufweist, zwischen denen das Tragelement angeordnet ist, kann ein Zwischenboden sowohl von der einen als auch von der anderen Seite mit den Randabschnitten verbunden sein.

Um eine relativ hohe Stabilität des Trennkörpers zu erreichen, wird vorgeschlagen, daß jeder säulenartige Halteabschnitt mit dem Tragelement über wenigstens ein Verbindungselement verbunden ist. Die Halteabschnitte weisen vorzugsweise einen im wesentlichen wenigstens teilkreisförmigen Querschnitt auf. Die lichte Breite der Halteabschnitte im Bereich der Auflage ist vorzugsweise kleiner als die Dicke des Trennkörpers, insbesondere des Tragelementes. Durch entsprechende Ausgestaltung der Befestigungselemente wird eine Verbindung der Trennkörper und der Zwischenböden geschaffen, bei der die Verbindungsstelle nicht den Zwischenraum weiter verringert.

Die Zwischenböden können plattenförmig ausgebildet sein. Sie liegen auf den Auflagen auf. Bevorzugt ist eine Ausgestaltung der Zwischenböden, die Auflagelaschen aufweisen. Die Länge der Auflagenlaschen entspricht vorzugsweise im wesentlichen der Länge der Auflagen.

Die Befestigung der Zwischenböden mit den Halteabschnitten der Trennkörper erfolgt vorzugsweise über Befestigungselemente, die wenigstens teilweise federelastisch ausgebildet sind. Die Zwischenböden werden über die Befestigungselemente quasi durch Einklipsen mit den Trennkörpern verbunden. Bevorzugt ist hierbei eine Ausgestaltung der Befestigungselemente, die einen offenen Durchgangsabschnitt aufweisen, durch den ein Halteabschnitt in eine diesen wenigstens teilweise umgreifende Aufnahme einführbar ist. Die lichte Breite des Durchgangsabschnitts ist hierbei vorzugsweise kleiner als die lichte Breite des Halteabschnitts.

Zur Lösung der vorbezeichneten Aufgabe wird auch ein Kettenglied mit zwei Kettenlaschen, daß wenigstens einen Gelenkabschnitt zur gelenkigen Verbindung mit einem anderen Kettenglied aufweist, vorgeschlagen, daß sich dadurch auszeichnet, daß dieses mit den Bausatzelementen nach einem der Ansprüche 1 bis 19 komplettiert ist. Ferner wird eine erfindungsgemäße Energieführungskette mit Kettengliedern, die jeweils Kettenlaschen und wenigstens einen Gelenkabschnitt zur gelenkigen Verbindung mit einem anderen Kettenglied aufweisen, vorgeschlagen, die sich dadurch auszeichnet, daß mit wenigstens einem Kettenglied nach Anspruch 20 komplettiert ist.

Weitere Einzelheiten und Vorteile des Bausatzes sowie eines Kettengliedes werden anhand der in der Zeichnung dargestellten Ausführungsbeispiele erläutert. Es zeigen:
- Fig. 1: ein erstes Ausführungsbeispiel eines Trennkörpers in der Vorderansicht,
- Fig. 2: den Trennkörper nach Fig. 1 in einer Seitenansicht von links im Teilschnitt,
- Fig. 3: eine Schnittansicht entlang der Linie A-A nach Fig. 1,
- Fig. 4: eine Schnittansicht des Trennkörpers entlang der Linie B-B nach Fig. 1,
- Fig. 5: ein erstes Ausführungsbeispiel eines Zwischenbodens in einer Vorderansicht,
- Fig. 6: den Zwischenboden nach Fig. 5 in einer Draufsicht,
- Fig. 7: den Zwischenboden nach Fig. 5 in einer Seitenansicht von links,
- Fig. 8: zwei nebeneinander angeordnete Zwischenböden nach Fig. 5,
- Fig. 9: zwei Trennkörper nach Fig. 1 in Verbindung mit einem Zwischenboden nach Fig. 5 in einer Draufsicht und im Schnitt,
- Fig. 10: ein zweites Ausführungsbeispiel eines Trennkörpers in einer Vorderansicht,
- Fig. 11: den Trennkörper nach Fig. 10 in einer Seitenansicht im Teilschnitt,
- Fig. 12: eine Draufsicht im Schnitt entlang der Linie A-A nach Fig. 10,
- Fig. 13: eine Draufsicht im Schnitt entlang der Linie B-B- nach Fig. 10,
- Fig. 14: ein zweites Ausführungsbeispiel eines Trennkörpers in der Vorderansicht,
- Fig. 15: eine Seitenansicht von rechts des Trennkörpers nach Fig. 14 im Teilschnitt,
- Fig. 16: eine Schnittansicht entlang der Linie A-A nach Fig. 14,
- Fig. 17: eine Draufsicht entlang der Schnittlinie B-B nach Fig. 14,
- Fig. 18: ein zweites Ausführungsbeispiel eines Zwischenbodens in der Vorderansicht,
- Fig. 19: den Zwischenboden nach Fig. 18 in einer Draufsicht,
- Fig. 20: den Zwischenboden nach Fig. 18 in einer Seitenansicht,
- Fig. 21: eine Anordnung zweier Trennkörper nach Fig. 14 in Verbindung mit einem Trennboden nach Fig. 18 in einer Draufsicht,
- Fig. 22: die Anordnung nach Fig. 21 in einer Vorderansicht,
- Fig. 23: schematisch einen Trennkörper nach Fig. 14 mit Zwischenböden nach Fig. 18 und
- Fig. 24: ein Kettenglied in der Vorderansicht.

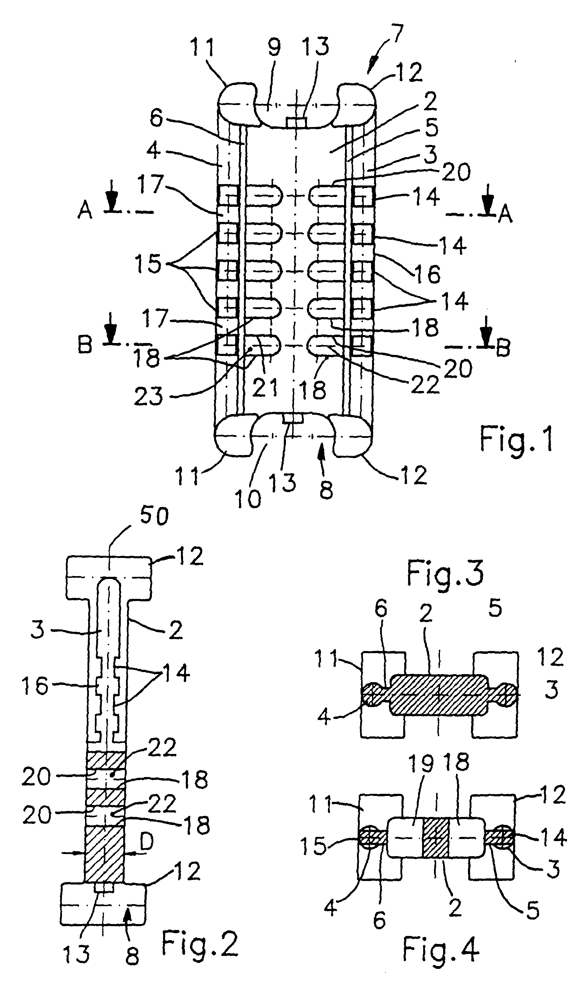

Fig. 1 zeigt ein erstes Ausführungsbeispiel eines Trennkörpers 1, der ein Bausatzelement eines Bausatzes mit mehreren Bausatzelementen für ein an mehrere Anwendungsfälle anpaßbares Kettenglied, daß zwei Kettenlaschen hat, bildet. Der Trennkörper 1 weist ein im wesentlichen plattenförmiges Tragelement 2 auf. Das Tragelement 2 ist zwischen zwei säulenartig ausgebildeten Randabschnitten 3, 4 angeordnet. Die säulenartigen Randabschnitte 3, 4 sind jeweils über ein Verbindungselement 5, 6 mit dem Tragelement 2 verbunden, wie dies insbesondere aus den Fig. 3 und 4 ersichtlich ist. Bei den Verbindungselementen 5, 6 handelt es sich um Stege, die sich über die gesamte Länge des Trennkörpers 1 erstrecken. Die Randabschnitte 3, 4 erstrecken sich im wesentlichen parallel zur Achse 50.

Der Trennkörper 1 weist an seinen jeweiligen Endabschnitten eine Aufnahme 9 bzw. 10 auf, die durch zwei beabstandete Vorsprünge 11, 12 teilweise begrenzt ist. Die Innenkontur der Aufnahmen 9, 10 ist an entsprechende Außenkontur einer Traverse angepaßt. Im montierten Zustand des Trennkörpers 1 greift eine nicht dargestellte Traverse in die Aufnahme 9 bzw. 10 ein. Zur Arretierung des Trennkörpers auf einer Traverse weist dieser eine Rastnase 13 auf. Die Rastnase 13 greift in einen Haltebereich einer Traverse ein.

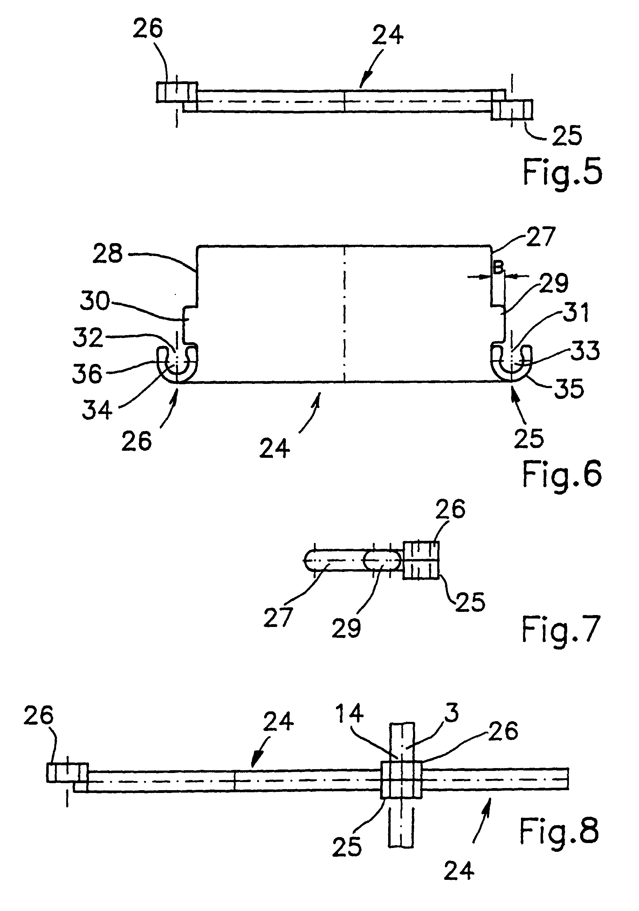

Zur lösbaren Befestigung eines Zwischenbodens, wie er beispielsweise in der Fig. 6 dargestellt ist, weist der Trennkörper 1 Halteabschnitte 14, 15 auf. Die Halteabschnitte 14 sind am Randabschnitt 3 und die Halteabschnitte 15 am Randabschnitt 4 des Trennkörpers 1 ausgebildet. Die Halteabschnitte 14, 15 weisen einen im wesentlichen rechteckförmigen Querschnitt auf. Der Randabschnitt 3 weist mehrere Halteabschnitte 14 auf, die beabstandet zueinander ausgebildet sind. Zwischen den Halteabschnitten 14 sind Abschnitte 16 ausgebildet, die einen größeren Querschnitt haben als die Halteabschnitte 14. Entsprechende Abschnitte 17 sind zwischen den Halteabschnitten 15 des Randabschnitts 4 ausgebildet.

Das Tragelement 2 des Trennkörpers 1 weist mehrere im wesentlichen quer zur Längserstreckung des Trennkörpers 1 verlaufende Auflagen 18, 19 auf. Die Auflagen 18 erstrecken sich von dem Randabschnitt 3 einwärts in das Tragelement 2. Die Auflagen 18 fluchten im wesentlichen mit den Halteabschnitten 14. Sie erstrecken sich über einen Teil der Breite des Tragelementes 2. Die Auflagen 19 fluchten im wesentlichen mit den Halteabschnitten 15. Auch die Auflagen 19 erstrecken sich lediglich über einen Teil der Breite des Tragelementes 2. Wie insbesondere aus den Fig. 2 und 4 ersichtlich ist, ist die lichte Breite des Halteabschnitts 14 bzw. 15 im Bereich der Auflage 18 bwz. 19 kleiner als die Dicke des Tragelementes 2.

Das Tragelement 2 weist Anschläge 20, 21 auf. Einer jeden Auflage 18 ist ein Anschlag 20 zugeordnet. Der Anschlag 20 liegt der Auflage 18 gegenüber. In dem dargestellten Ausführungsbeispiel der Fig. 1 weist jede Auflage 19 einen Anschlag 21 auf. Der Anschlag 21 ist gegenüber der Auflage 19 ausgebildet.

Eine Auflage 18 und ein Anschlag 20 sowie eine Auflage 19 und eine Anschlag 21 sind durch Freiarbeitungen 22 bzw. 23 gebildet.

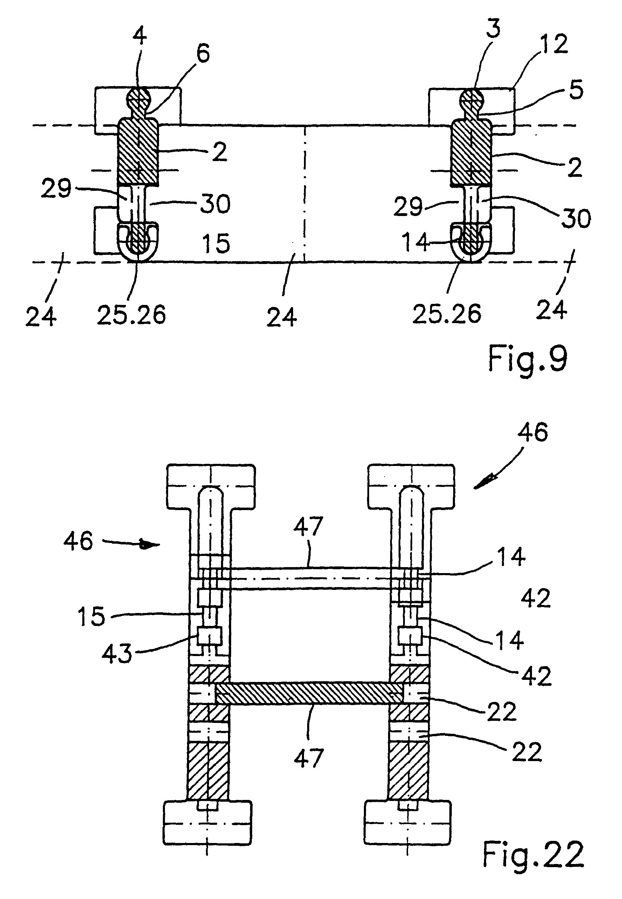

In den Fig. 5 bis 8 ist eine Ausführungsform eines Zwischenbodens 24 dargestellt. Der Zwischenboden 24 ist im wesentlichen plattenförmig ausgebildet. Er weist zwei Befestigungselemente 25, 26 auf, die die Halteabschnitte 14, 15 wenigstens teilweise umgreifen, wie dies in der Fig. 9 dargestellt ist. Die Befestigungselemente 25, 26 sind an den Schmalseiten 27, 28 ausgebildet. An jeder Schmalseite 27 bzw. 28 ist eine Auflagelasche 29 bzw. 30 ausgebildet, die sich über einen Teil der Längserstreckung der Schmalseite 27 bzw. 28 erstreckt. Die Erstreckung der Auflagelaschen 29, 30 entspricht im wesentlichen der Länge der Auflagen 18 bzw. 19. Die Breite B der Auflagelaschen 29, 30 ist vorzugsweise nicht größer als die Hälfte der Dicke D (Fig. 2) des Tragelementes 2.

Das Befestigungselement 25, 26 weist jeweils einen offenen Durchgangsabschnitt 31 bzw. 32 auf. Der Durchgangsabschnitt 31 bzw. 32 erweitert sich in eine Aufnahme 33 bzw. 34. Die Befestigungselemente sind wenigstens teilweise federelastisch ausgebildet. Beim Festlegen der Zwischenböden am Trennkörper federn die Schenkel 35 bzw. 36 der Befestigungselemente 25, 26 auf.

Wie aus der Fig. 5 ersichtlich ist sind die Befestigungselemente 25, 26 versetzt zueinander ausgebildet.

In der Fig. 8 sind zwei Zwischenböden 24 dargestellt. Die Zwischenböden 24 sind an einem gemeinsamen Halteabschnitt 14 angeordnet. Durch die versetzte Ausgestaltung der Befestigungselemente 26 bzw. 25 bilden die benachbarten Zwischenböden 24 eine gemeinsame Tragebene für Leitungen, die in einer Energieführungskette geführt werden.

In der Fig. 9 ist eine Anordnung zweier Trennkörper 1 mit einem Zwischenboden 24 dargestellt. Die Trennkörper 1 entsprechen dem in den Fig. 1 bis 4 dargestellten Trennkörper. Der Zwischenboden 24 entspricht dem in den Fig. 5 bis 7 dargestellten Zwischenboden. Wie aus der Fig. 9 ersichtlich ist, umgreifen die Befestigungselemente 25, 26 teilweise die Halteabschnitte 14 bzw. 15 des Trennkörpers 1. Die Auflagelaschen 29, 30 liegen auf den Auflagen 18 bzw. 19 auf. Bei einer Anordnung zweier Zwischenböden 24, wie sie in der Fig. 8 dargestellt sind, liegen die Laschen 29 bzw. 30 der benachbarten Zwischenböden 24 auf der gemeinsamen Aufnahme 18. Diese Anordnung ist gestrichelt in der Fig. 9 dargestellt.

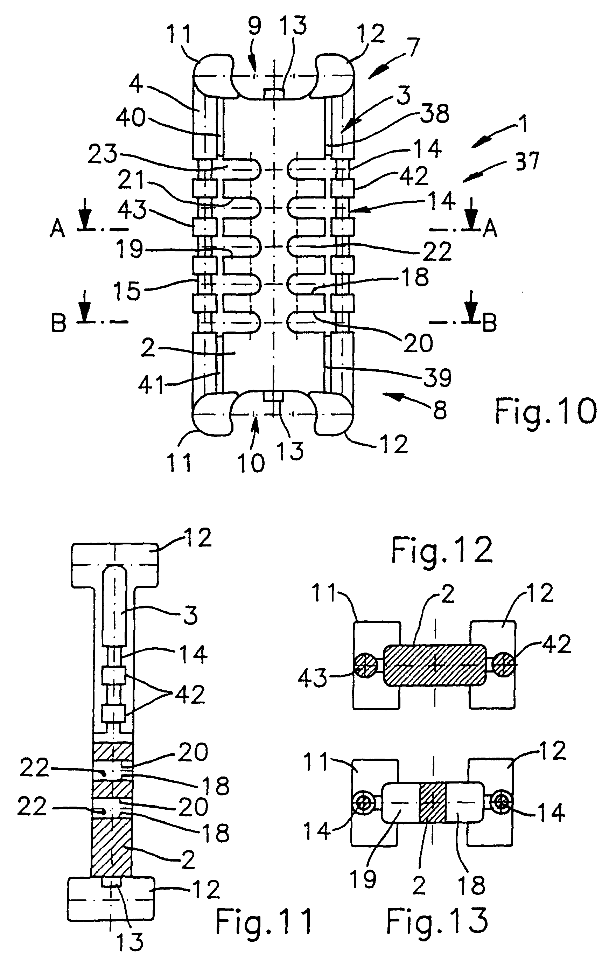

In den Fig. 10 bis 13 ist ein weiteres Ausführungsbeispiel eines Trennkörpers 37 dargestellt. Der prinzipielle Aufbau eines Trennkörpers 37 entspricht dem Aufbau des Trennkörpers 1, wie er in den Fig. 1 bis 4 dargestellt ist. Der Trennkörper 37 weist ein Tragelement 2 auf, welches zwischen den Randabschnitten 3, 4 angeordnet ist. Die Randabschnitte 3, 4 sind im wesentlichen säulenförmig ausgebildet. Im Bereich der Endabschnitte 7, 8 des Trennkörpers 37 sind Verbindungselemente 38, 39 ausgebildet, die das Tragelement 2 mit dem Randabschnitt 3 verbinden. Der Randabschnitt 4 ist über Verbindungselemente 40, 41 mit dem Tragelement 2 verbunden.

Die Randabschnitte 3, 4 sind säulenförmig ausgebildet. Sie weisen jeweils einen im wesentlichen kreisförmigen Querschnitt auf. Jeder Randabschnitt 3, 4 weist mehrere über die Länge verteilte Halteabschnitte 14 bzw. 15 auf. Die Halteabschnitte 14, 15 sind fluchtend ausgebildet. Sie fluchten auch mit den Freiarbeitungen 22, 23.

Zwischen den einzelnen Halteabschnitten 14, 15 sind Distanzstücke 42 bzw. 43 ausgebildet. Die Distanzstücke 42, 43 haben einen kreisförmigen Querschnitt. Sie sind koaxial zu den Halteabschnitten 14 bzw. 15 ausgebildet. Der Durchmesser der Distanzstücke 42, 43 ist größer als der Durchmesser der Halteabschnitte 14 bzw. 15. Sie bilden jeweils einen Kragen, auf den die jeweilige Stirnfläche des Befestigungselementes 25, 26 eines Zwischenbodens 24 zur Anlage bringbar ist.

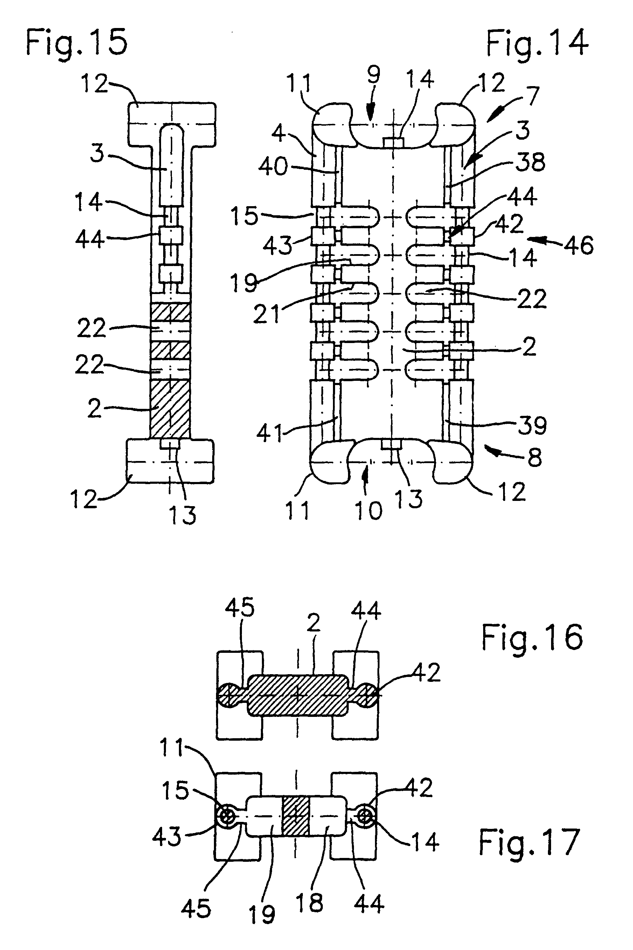

In den Fig. 14 bis 17 ist ein weiteres Ausführungsbeispiel eines Trennkörpers 46 dargestellt. Der Trennkörper 46 stellt eine Variante des in den Fig. 10 bis 13 dargestellten Trennkörpers 37 dar. Hinsichtlich der Einzelheiten wird daher auf die Beschreibung des Trennkörpers 37 verwiesen. Der modifizierte Trennkörper 46 unterscheidet sich von dem in den Fig. 10 bis 13 dargestellten Trennkörper 37 dadurch, daß die Randabschnitte 3, 4 durch zusätzliche Verbindungselemente 44, 45 mit dem Tragelement 2 verbunden sind. Bei den Verbindungselementen 44, 45 handelt es sich um Stege, die die Distanzstücke 42, 43 mit dem Tragelement 2 verbinden. Hierdurch wird ein sehr stabiler Trennkörper 46 erreicht. Die Randabschnitte 3, 4, die säulenartig ausgebildet sind, verbiegen sich bei einer Belastung nicht.

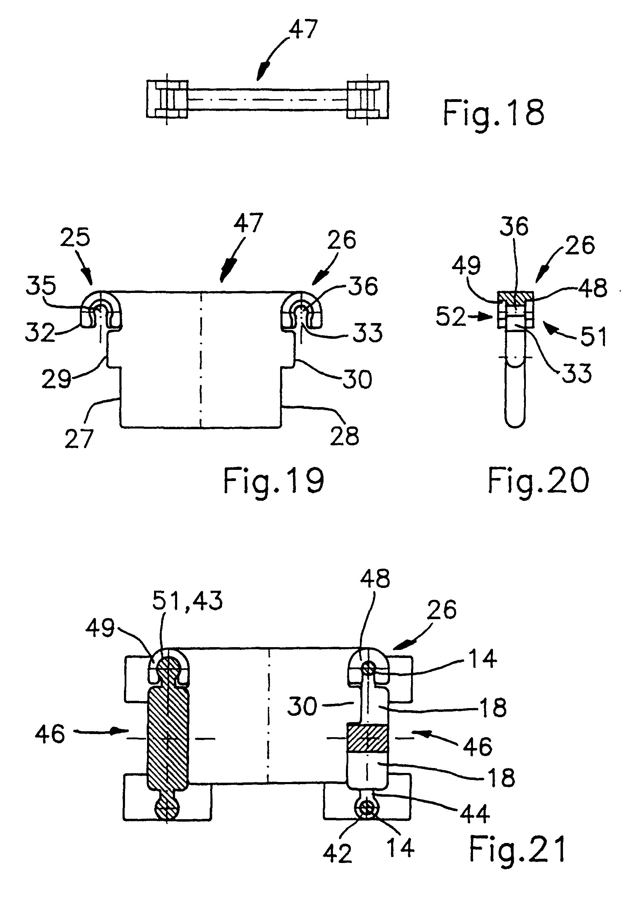

Eine weitere Ausgestaltung eines Zwischenbodens 47 ist in den Fig. 18 bis 20 dargestellt. Die in diesen Figuren dargestellte Ausführungsform des Zwischenbodens 47 unterscheidet sich von der in den Fig. 5 bis 7 dargestellten Zwischenboden 24 im wesentlichen durch die Ausgestaltung der Befestigungselemente 25, 26. Die Befestigungselemente 25, 26 sind im wesentlichen U-förmig ausgebildet. Sie weisen jeweils einen offenen Durchgangsabschnitt 32, 33 auf. Der Durchgangsabschnitt 32 des Befestigungselementes 25 erweitert sich in eine Aufnahme 36. Der Durchgangsabschnitt 33 erweitert sich in einen Aufnahme 36 des Befestigungslementes 26. Im montierten Zustand des Zwischenbodens 47 umgreift das Befestigungselement 25 bzw. 26 den Halteabschnitt 14 bzw. 15 des Trennkörpers 46, wie dies in der Fig. 21 dargestellt ist. Jedes Befestigungselement 25, 26 weist beidseits der Aufnahme 35 bzw. 36 einen Kragen 48 bzw. 49 auf. Der Kragen 48, 49 begrenzt eine Öffnung 51 bzw. 52, die mit dem offenen Durchgangsabschnitt und der Aufnahme korrespondiert. Die Geometrie der Öffnung 51 bzw. 52 ist an die Außengeometrie der Distanzstücke 42, 43 angepaßt. In der Fig. 21 ist dargestellt, daß der Kragen 48 mit seiner Öffnung 51 an dem Distanzstück 43 anliegt. Die Kragen 48 und 49 tragen zusammen mit den Distanzstücken 42 bzw. 43 zur Halterung des Zwischenbodens 47 an dem Trennkörper 46 bei.

Werden zwei Zwischenböden 47 unmittelbar übereinander am Trennkörper 46 angeordnet, so liegen die Kragen 48, 49 aufeinander. Die Zwischenböden 47 stützen sich gegenseitig ab.

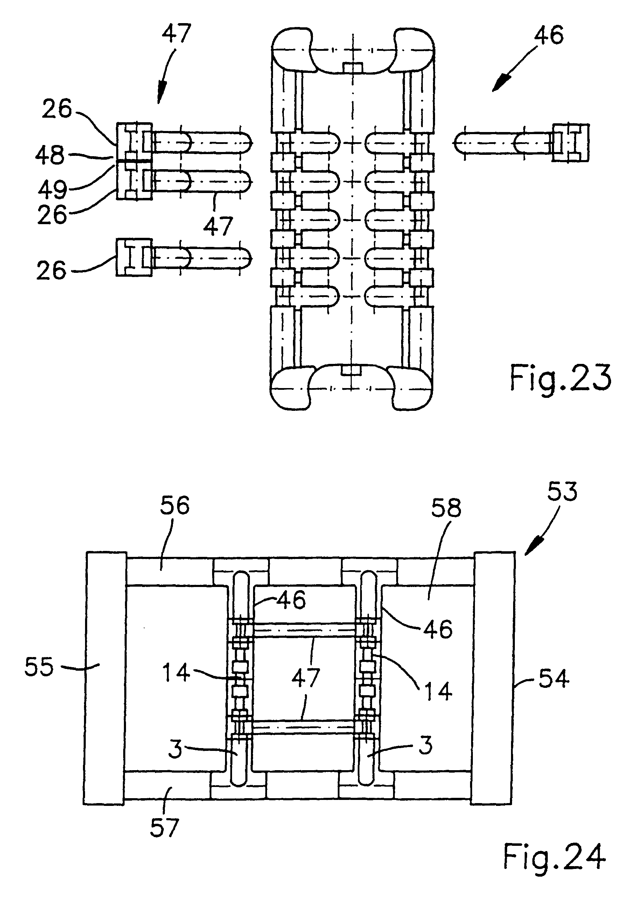

In der Fig. 24 ist ein Kettenglied 53 mit zwei Kettenlaschen 54, 55 dargestellt. Die Kettenlaschen 54, 55 sind beabstandet zueinander angeordnet. Sie sind über Traversen 56, 57 miteinander verbunden. Mindestens eine der Traversen 56, 57 ist lösbar mit den Kettenlaschen 54, 55 verbunden. In den durch die Kettenlaschen 54, 55 und die Traversen 56, 57 begrenzten Aufnahmekanalabschnitt 58 sind zwei Trennkörper 46 angeordnet. Die Endabschnitte der Trennkörper 46 sind mit der Traverse 56 bzw. 57 lösbar verbunden. Die Trennkörper 46 sind mit Abstand zueinander angeordnet. Zwischen den Trennkörpern 46 und parallel zu der Traverse 56 bzw. 57 sind zwei Zwischenböden 47 angeordnet, die an den Trennkörpern 46 befestigt sind. Eine Energieführungskette mit Kettengliedern, die jeweils Kettenlaschen wenigstens einen Gelenkabschnitt zur gelenkigen Verbindung mit einem anderen Kettenglied aufweisen, umfaßt wenigstens ein Kettenglied, welches mit den Bausatzelementen, bei denen es sich um Trennkörper 1, 37 oder Zwischenböden 24, 47 handelt, komplettiert. Die vorstehend dargestellten Ausführungsbeispiele zeigen mögliche Alternativen zur Ausgestaltung der Trennkörper und der Tragelemente. Die in den Figuren dargestellten Kombinationen der Trennkörper und Tragelemente sind beispielhaft. Unterschiedliche Kombinationen von Trennkörpern und Tragelementen sind möglich.

### BEZUGSZEICHENLISTE

- 1: Trennkörper
- 2: Tragelement
- 3, 4: Randabschnitt
- 5, 6: Verbindungselement
- 7, 8: Endabschnitt
- 9, 10: Aufnahme
- 11, 12: Vorsprung
- 13: Rastnase
- 14, 15: Haltabschnitt
- 16, 17: Abschnitt
- 18, 19: Auflage
- 20, 21: Anschlag
- 22, 23: Freiarbeitung
- 24: Zwischenboden
- 25, 26: Befestigung
- 27, 28: Schmalseite
- 29, 30: Auflagelasche
- 31, 32: Durchgangsabschnitt
- 33, 34: Aufnahme
- 35, 36: Schenkel
- 37: Trennkörper
- 38, 39, 40, 41: Verbindungselement
- 42, 43: Distanzstück
- 44, 45: Verbindungselement
- 46: Trennkörper
- 47: Zwischenboden
- 48, 49: Kragen
- 50: Achse
- 51, 52: Öffnung
- 53: Kettenglied
- 54, 55: Kettenlasche
- 56, 57: Traverse
- 58: Aufnahmekanal

## Patentansprüche

1. Bausatz mit mehreren Bausatzelementen für ein an mehrere Anwendungsfälle anpaßbares Kettenglied (53), das zwei Kettenlaschen (54, 55) hat, mit folgenden Bausatzelementen :
a) Trennkörpern (1, 37, 46), die mehrere im wesentlichen quer zur Längserstreckung der Trennkörper (1, 37, 46) verlaufende Auflagen (18, 19) sowie Halteabschnitte (14, 15) aufweisen;
b) Zwischenböden (24, 47), die an zwei benachbarten Trennkörpern (1, 37, 46) durch Befestigungselemente (25, 26), die einen Halteabschnitt (14, 15) der Trennkörper (1, 37, 46) wenigstens teilweise umgreifen, befestigbar sind, wobei die Zwischenböden (24, 47) wenigstens teilweise auf den Auflagen (18, 19) aufliegen,
c) Traversen (56, 57), die mit einem Haltebereich versehen sind, an denen Trennkörper (1, 37, 46) positionierbar, vorzugsweise lösbar befestigbar, sind;
**dadurch gekennzeichnet**, daß die Halteabschnitte (14,15) durch säulenartige Randabschnitte (3, 4) gebildet sind.

2. Bausatz nach Anspruch 1, **dadurch gekennzeichnet**, daß die Trennkörper (1, 37, 46) an ihren jeweiligen, gegenüberliegenden Endabschnitten (7, 8) wenigstens einen sich in Längsrichtung des Trennkörpers (1, 37, 46) erstreckenden Vorsprung (11, 12) aufweist.

3. Bausatz nach Anspruch 2, **dadurch gekennzeichnet**, daß jeder Trennkörper (1, 37, 46) an seinem jeweiligen Endabschnitt (7, 8) nur einen Vorsprung (11, 12) aufweist, vorzugsweise sind die Vorsprünge (11, 12) diametral zueinander versetzt.

4. Bausatz nach Anspruch 2, **dadurch gekennzeichnet**, daß jeder Trennkörper (1, 37, 46) an seinem jeweiligen Endabschnitt (7, 8) zwei beabstandete Vorsprünge (11, 12) aufweist.

5. Bausatz nach Anspruch 2, 3 oder 4, **dadurch gekennzeichnet**, daß die Trennkörper (1, 37, 46) an mindestens einem Endabschnitten (7, 8) wenigstens eine sich in Längsrichtung des Trennkörpers (1, 37, 46) erstreckende Rastnase (13) aufweist, die mit dem Haltebereich der Traversen (56, 57) zusammenwirkt.

6. Bausatz nach einem der Ansprüche 1 bis 5, **dadurch gekennzeichnet**, daß Oberhalb der Auflage (18, 19) wenigstens ein Anschlag ausgebildet ist.

7. Bausatz nach Anspruch 6, **dadurch gekennzeichnet**, daß die Auflage (18, 19) und der Anschlag (20, 21) durch eine Freiarbeitung (22, 23) im Trennkörper (1, 37, 46) ausgebildet sind.

8. Bausatz nach einem der Ansprüche 1 bis 7, **dadurch gekennzeichnet**, daß die Auflagen (18, 19) auf beiden Seiten des Trennkörpers (1, 37, 46) fluchtend ausgebildet sind.

9. Bausatz nach einem der Ansprüche 1 bis 8, **dadurch gekennzeichnet**, daß die Auflagen (18, 19) an einem im wesentlichen plattenförmigen Tragelement (2) mit Längsrändern ausgebildet sind.

10. Bausatz nach einem der Ansprüche 1 bis 9, **dadurch gekennzeichnet**, daß die Auflagen (18, 19) und gegebenenfalls die Anschläge (20, 21) über einem Teil der Quererstreckung des Tragelementes (2) ausgebildet sind.

11. Bausatz nach Anspruch 10, **dadurch gekennzeichnet**, daß die Auflagen (18, 19) und gegebenenfalls die Anschläge (20, 21) sich beiseits der Längsränder und quer zu diesen und zueinander gerichtet verlaufen.

12. Bausatz nach einem der Ansprüche 1 bis 11, **dadurch gekennzeichnet**, daß jeder Trennkörper (1, 37, 46) zwei Randabschnitte (3, 4) aufweist, zwischen denen das Tragelement (2) angeordnet ist.

13. Bausatz nach einem der Ansprüche 1 bis 12, **dadurch gekennzeichnet**, daß jeder säulenartige Halteabschnitt (14, 15) mit dem Tragelement (2) über wenigstens ein Verbindungselement (25, 26) verbunden ist.

14. Bausatz nach einem der Ansprüche 1 bis 13, **dadurch gekennzeichnet**, daß die Halteabschnitte (14, 15) einen im wesentlichen wenigstens teilkreisförmigen Querschnitt haben.

15. Bausatz nach einem der Ansprüche 1 bis 14, **dadurch gekennzeichnet**, daß die lichte Breite des Halteabschnitts (14, 15) im Bereich der Auflage (18, 19) kleiner ist als die Dicke des Trennkörpers, vorzugsweise des Tragelementes (2).

16. Bausatz nach einem der Ansprüche 1 bis 15, **dadurch gekennzeichnet**, daß die Zwischenböden (24, 47) Auflagelaschen (29, 20) aufweisen.

17. Bausatz nach Anspruch 16, **dadurch gekennzeichnet**, daß die Länge der Auflagelaschen (29, 20) im wesentlichen der Länge der Auflagen (18, 19) entspricht.

18. Bausatz nach einem der Ansprüche 1 bis 17, **dadurch gekennzeichnet**, daß die Befestigungselemente (25, 26) wenigstens teilweise federelastisch ausgebildet sind.

19. Bausatz nach Anspruch 18, **dadurch gekennzeichnet**, daß jedes Befestigungselement (25, 26) einen offenen Durchgangsabschschnitt (31, 32), der sich in eine den Halteabschnitt (14, 15) wenigstens teilweise umgreifende Aufnahme (33, 34) erweitert, aufweist.

20. Kettenglied mit zwei Kettenlaschen (54, 55), das wenigstens einen Gelenkabschnitt zur gelenkigen Verbindung mit einem anderen Kettenglied aufweist, **dadurch gekennzeichnet**, daß dieses mit den Bausatzelementen nach einem der Ansprüche 1 bis 19 komplettiert ist.

21. Energieführungskette mit Kettengliedern, die jeweils Kettenlaschen (54, 55) und wenigstens einen Gelenkabschnitt zur gelenkigen Verbindung mit einem anderen Kettenglied aufweisen, **dadurch gekennzeichnet**, daß sie mit wenigstens einem Kettenglied (53) nach Anspruch 20 komplettiert ist.

## Claims

1. Component kit with a plurality of component kit elements for a chain link (53) adaptable to different uses, which has two chain plates (54, 55), with the following component kit elements:
a) separating bodies (1, 37, 46), having a plurality of supports (18, 19) extending substantially in transverse direction to the longitudinal extent of the separating bodies (1, 37, 46); and holding portions (14, 15),
b) intermediate decks (24, 47), attachable to two adjacent separating bodies (1, 37, 46) by fastening elements (25, 26) which encompass at least partially a holding portion (14, 15) of the separating bodies (1, 37, 46), the intermediate decks (24, 47) being at least partially supported on the supports (18, 19),
c) transverse portions (56, 57) provided with a holding region to which separating bodies (1, 37, 46) are positionable, preferably releasably attachable,
**characterized in that** the holding portions (14, 15) are formed by pillar shaped edge portions (3, 4).

2. Component kit according to claim 1, **characterized in that** on their respective oppositely disposed end portions (7, 8) the separating bodies (1, 37, 46) have at least one projection (11, 12) extending in longitudinal direction of the separating body (1, 37, 46).

3. Component kit according to claim 2, **characterized in that** on its respective end portion (7, 8) each separating body (1, 37, 46) has only one projection (11, 12), preferably the projections (11, 12) are diametrically displaced to one another.

4. Component kit according to claim 2, **characterized in that** on its respective end portion (7, 8) each separating body (1, 37, 46) has two projections (11, 12) being spaced apart.

5. Component kit according to claim 2, 3 or 4, **characterized in that** the separating bodies (1, 37, 46) on at least one end portion (7, 8) have at least one engaging protrusion (13) extending in longitudinal direction of the separating body (1, 37, 46), the engaging protrusion (13) acting together with the holding region of the transverse portions (56, 57).

6. Component kit according to one of claims 1 to 5, **characterized in that** above the support (18, 19) at least one stop is formed.

7. Component kit according to claim 6, **characterized in that** the support (18, 19) and the stop (20, 21) are formed by a clearance (22, 23) in the separating body (1, 37, 46).

8. Component kit according to one of claims 1 to 7, **characterized in that** the supports (18, 19) are formed in true alignment on both sides of the separating body (1, 37, 46).

9. Component kit according to one of claims 1 to 8, **characterized in that** the supports (18, 19) are formed on a substantially plate shaped supporting element (2) with longitudinal edges.

10. Component kit according to one of claims 1 to 9, **characterized in that** the supports (18, 19) and if necessary the stops (20, 21) are formed across a part of the transverse extent of the supporting element (2).

11. Component kit according to claim 10, **characterized in that** the supports (18, 19) and if necessary the stops (20, 21) extend on both sides of and transversally to the longitudinal edges and directed to one another.

12. Component kit according to one of claims 1 to 11, **characterized in that** each separating body (1, 37, 46) has two edge portions (3, 4) between which the supporting element (2) is disposed.

13. Component kit according to one of claims 1 to 12, **characterized in that** each pillar shaped holding portion (14, 15) is connected via at least one connecting element (25, 26) to the supporting element (2).

14. Component kit according to one of claims 1 to 13, **characterized in that** the holding portions (14, 15) have a substantially divided-circle shaped cross section.

15. Component kit according to one of claims 1 to 14, **characterized in that** in the region of the support (18, 19) the horizontal clearance of the holding portion (14, 15) is smaller than the thickness of the separating body, preferably of the supporting element (2).

16. Component kit according to one of claims 1 to 15, **characterized in that** the intermediate decks (24, 47) are provided with support plates (29, 20).

17. Component kit according to claim 16, **characterized in that** the length of the support plates (29, 20) is substantially equal to the length of the supports (18, 19).

18. Component kit according to one of claims 1 to 17, **characterized in that** the fastening elements (25, 26) are configured at least partially resiliently.

19. Component kit according to claim 18, **characterized in that** each fastening element (25, 26) has an open passage portion (31, 32) expanding to a recess (33, 34) which encompasses at least partially the holding portion (14, 15).

20. Chain link member with two chain plates (54, 55) which has at least one hinge portion for being hingedly connected to another chain link member, **characterized in that** said chain link member is completed by means of the component kit elements according to one of claims 1 to 19.

21. Energy carrier chain with chain link members having chain plates (54, 55) respectively and at least one hinge portion for being hingedly connected to another chain link member, **characterized in that** said energy carrier chain is completed with at least one chain link member (53) according to claim 20.

## Revendications

1. Jeu de pièces avec plusieurs éléments de jeu de pièces pour un chaînon (53) adaptable à plusieurs utilisations qui a deux éclisses de chaîne (54, 55), avec les éléments de jeu de pièces suivants :
a) des corps de séparation (1, 37, 46) comportant plusieurs supports (18, 19) qui s'étendent sensiblement en direction transversale à l'étendue longitudinale des corps de séparation (1, 37, 46) ainsi que des sections de retenue (14, 15),
b) des fonds intermédiaires (24, 47) pouvant être fixés à deux corps de séparation (1, 37, 46) adjacents par des éléments de fixation (25, 26) qui enserrent au moins partiellement une section de retenue (14, 15) des corps de séparation (1, 37, 46), les fonds intermédiaires (24, 47) s'appuyant au moins partiellement sur les supports (18, 19),
c) des entretoises (56, 57) étant pourvues d'une zone de retenue auxquelles peuvent être positionnés des corps de séparation (1, 37, 46), de préférence être fixés de façon détachable,
**caractérisé en ce que** les sections de retenue (14, 15) sont formées par des sections de bord (3, 4) en forme de colonnes.

2. Jeu de pièces selon la revendication 1, **caractérisé en ce qu**'au niveau de leurs sections d'extrémité opposées (7, 8) respectives les corps de séparation (1, 37, 46) présentent au moins une saillie (11, 12) s'étendant en direction longitudinale du corps de séparation (1, 37, 46).

3. Jeu de pièces selon la revendication 2, **caractérisé en ce qu**'au niveau de sa section d'extrémité (7, 8) respective chaque corps de séparation (1, 37, 46) ne présente qu'une saillie (11, 12), de préférence les saillies (11, 12) sont diamétralement décalées.

4. Jeu de pièces selon la revendication 2, **caractérisé en ce qu**'au niveau de sa section d'extrémité (7, 8) respective chaque corps de séparation (1, 37, 46) présente deux saillies (11, 12) à distance l'une de l'autre.

5. Jeu de pièces selon la revendication 2, 3 ou 4, **caractérisé en ce qu**'au niveau d'au moins une section d'extrémité (7, 8) les corps de séparation (1, 37, 46) présentent au moins une protubérance d'arrêt (13) s'étendant en direction longitudinale du corps de séparation (1, 37, 46) et coopérant avec la zone de retenue des entretoises (56, 57).

6. Jeu de pièces selon l'une des revendications 1 à 5, **caractérisé en ce qu**'au moins une butée est formée au-dessus du support (18, 19).

7. Jeu de pièces selon la revendication 6, **caractérisé en ce que** le support (18, 19) et la butée (20, 21) sont formés par un dégagement (22, 23) dans le corps de séparation (1, 37, 46).

8. Jeu de pièces selon l'une des revendications 1 à 7, **caractérisé en ce que** les supports (18, 19) sont formés en alignement des deux cotés du corps de séparation (1, 37, 46).

9. Jeu de pièces selon l'une des revendications 1 à 8, **caractérisé en ce que** les supports (18, 19) sont formés au niveau d'un élément de support (2) sensiblement en forme de plaque avec des bords longitudinaux.

10. Jeu de pièces selon l'une des revendications 1 à 9, **caractérisé en ce que** les supports (18, 19) et le cas échéant les butées (20, 21) sont formées pardessus une partie de l'étendue transversale de l'élément de support (2).

11. Jeu de pièces selon la revendication 10, **caractérisé en ce que** les supports (18, 19) et le cas échéant les butées (20, 21) s'étendent des deux cotés des bords longitudinaux et transversalement à ceux-ci et dirigés l'un vers l'autre.

12. Jeu de pièces selon l'une des revendications 1 à 11, **caractérisé en ce que** chaque corps de séparation (1, 37, 46) présente deux sections de bord (3, 4) entre lesquelles est agencé l'élément de support (2).

13. Jeu de pièces selon l'une des revendications 1 à 12, **caractérisé en ce que** chaque section de retenue (14, 15) en forme de colonne est liée à l'élément de support (2) par au moins un élément de liaison (25, 26).

14. Jeu de pièces selon l'une des revendications 1 à 13, **caractérisé en ce que** les sections de retenue (14, 15) ont une section transversale sensiblement au moins en forme de cercle divisé.

15. Jeu de pièces selon l'une des revendications 1 à 14, **caractérisé en ce que** dans la zone du support (18, 19) le diamètre intérieur de la section de retenue (14, 15) est plus petit que l'épaisseur du corps de séparation, de préférence de l'élément de support (2).

16. Jeu de pièces selon l'une des revendications 1 à 15, **caractérisé en ce que** les fonds intermédiaires (24, 47) présentent des éclisses de support (29, 20).

17. Jeu de pièces selon la revendication 16, **caractérisé en ce que** la longueur des éclisses de support (29, 20) correspond sensiblement à la longueur des supports (18, 19).

18. Jeu de pièces selon l'une des revendications 1 à 17, **caractérisé en ce que** les éléments de fixation (25, 26) sont formés au moins partiellement de façon résiliente.

19. Jeu de pièces selon la revendication 18, **caractérisé en ce que** chaque élément de fixation (25, 26) présente une section de passage ouverte (31, 32), qui s'élargit en un logement (33, 34) enserrant au moins partiellement la section de retenue (14, 15).

20. Chaînon avec deux éclisses de chaîne (54, 55) qui présente au moins une section d'articulation pour la liaison articulée avec un autre chaînon, **caractérisé en ce que** celui-ci est complété avec les éléments de jeu de pièces selon l'une des revendications 1 à 19.

21. Chaîne de transmission d'énergie avec des chaînons qui présentent des éclisses de chaîne (54, 55) et au moins une section d'articulation respectivement pour la liaison articulée avec un autre chaînon, **caractérisée en ce qu**'elle est complétée avec au moins un chaînon (53) selon la revendication 20.
